# EUROPÄISCHE PATENTSCHRIFT

(11) **EP 0 663 521 B1**
(45) Veröffentlichungstag und Bekanntmachung des Hinweises auf die Patenterteilung: **07.08.2002**
(21) Anmeldenummer: 94118378.2
(22) Anmeldetag: 23.11.1994
(51) Int. Cl.: F02P 5/04, F02D 41/02, F02D 41/34, F02D 41/40

(54) **Verfahren zur Gewinnung von Triggersignalen für die Regelung der Energie-umsetzung im Brennraum einer Brennkraftmaschine**
Method to obtain tuning signal for the control of energy conversion in the combustion space of an internal combustion engine
Méthode pour obtenir des signaux de déclenchement pour la régulation de conversion d'énergie dans les chambres de combustion d'un moteur à combustion interne

(30) Priorität: 16.12.1993 DE 4342985
(43) Veröffentlichungstag der Anmeldung: 19.07.1995
(73) Patentinhaber: Volkswagen Aktiengesellschaft, 38436 Wolfsburg (DE)
(72) Erfinder: Geiger, Istvan, Dipl.-Ing., D-38104 Braunschweig (DE); Oppermann, Winfried, Dipl.-Ing., D-38442 Wolfsburg (DE)

(56) Entgegenhaltungen:
- GB-A- 2 083 246
- US-A- 4 438 496

## Beschreibung

Die Erfindung betrifft ein Verfahren zur Gewinnung von Triggersignalen für die Regelung der Energieumsetzung im Brennraum einer Brennkraftmaschine mit Kraftstoffeinspritzung in einem Brennraum über brennraumindividuelle Einspritzventile. Verfahren dieser Art und zwar solche, die mit brennraumindividueller Regelung der Energieumsetzung in Abhängigkeit von den brennraumindividuellen Anteilen an der von der Maschine abgegebenen Leistung arbeiten, sind beispielsweise aus der Deutschen Offenlegungsschrift DE 38 02 803, der veröffentlichten Europäischen Patentanmeldung EP 113 227 A2 und der Deutschen Offenlegungsschrift DE 38 21 740 bekannt. Die Anteile der einzelnen Brennräume können dabei auf unterschiedliche Weise erfaßt werden, beispielsweise durch brennraumindividuelle Laufunruhenerfassung, meßtechnische Erfassung der Drehmomenten-Stützkraft der Maschine, brennraumindividuelle Auswertung des Körperschalls über einen Klopfsensor, brennraumindividuelle Messung der Abgastemperatur, Messung des Brennrauminnendrucks mittels eines Drucksensors oder meßtechnische Bewertung des Verbrennungsablaufs in den einzelnen Brennräumen über Ionenstrom-Sensoren.

Unabhängig davon, ob eine brennraumindividuelle Gewinnung von Signalen für die Kraftstoffeinspritzung und die Regelung der Energieumsetzung oder aber eine für alle Brennräume gültige Signalgewinnung erfolgt, geschieht die Gewinnung der Einspritzsignale und der Triggersignale für die Regelung der Energieumsetzung bzw. die Einregelung auf bestimmte Einspritz- und Zündzeitpunkte unabhängig voneinander.

Wie sich aber gezeigt hat, ist bei modernen Maschinenkonzepten, wie sie insbesondere für Kraftfahrzeug-Brennkraftmaschinen zweckmäßig sind, der in Zeit- oder Kurbelwinkeleinheiten festgelegte Abstand zwischen Einspritzbeginn und Auslösung der Zündung bzw. die Kraftstoffzumessung in Abhängigkeit der Motordrehzahl häufig wichtiger als eine bestimmte Zuordnung zur OT-Lage des betreffenden Kolbens bzw. der Kurbelwelle.

Die Problematik wird dadurch vergrößert, daß im allgemeinsten Fall Herstellungstoleranzen insbesondere an den Einspritzventilen sich hinsichtlich der Genauigkeit der verschiedenen Zeitpunkte nachteilig bemerkbar machen können. Es ist bekannt, daß in der Serienfertigung an Einspritzventilen umfangreiche Prüfvorgänge zur Realisierung geringer Exemplarstreuung vorgenommen werden, die mit erheblichem finanziellen Aufwand verbunden sind.

Aus der US-A-4,438,496 ist ein Verfahren zur Regelung der einzuspritzenden Kraftstoffmenge und des Einspritzbeginns sowie der Abgasrückführrate für einen Verbrennungsmotor bekannt. Dabei wird die Kraftstoffmenge in Abhängigkeit von der Fahrpedalstellung, der Drehzahl und der Ist-Kraftstoffmenge geregelt. Ebenso wird der entsprechenden Regelungseinrichtung ein Einspritzbeginn-Ist-Wert zugeführt. Die Ermittlung eines optimalen Zündzeitpunkts spielt jedoch in dieser Druckschrift keine Rolle, da diese Druckschrift ausschließlich mit dem Problem der Kraftstoffzufuhr befasst ist.

Des Weiteren ist aus der GB-A-2 083 246 ein Verfahren zur Bemessung der eingespritzten Kraftstoffmenge bekannt, wobei in Abhängigkeit von Betriebskenngrößen und der Fahrpedalstellung eine Soll-Kraftstoffmenge ermittelt und anhand der Differenz zwischen der Ist-Kraftstoffmenge und der Soll-Kraftstoffmenge die einzuspritzende Gesamtkraftstoffmenge gesteuert wird. Darüber hinaus wird in dieser Druckschrift offenbart, die Ist-Kraftstoffmenge aus dem Hut des Schließglieds der Einspritzdüse und den Kraftstoffdruck durch fortlaufende Integration während des gesamten Einspritzvorgangs zu erfassen. Zudem wird gemäß dieser Druckschrift der Soll-Einspritzzeitpunkt ermittelt, wobei dies unter anderem in Abhängigkeit von der Gaspedalstellung, der Motordrehzahl und der Soll-Gesamteinspritzmenge geschieht. Auch bei dieser Druckschrift spielt die Ermittlung des optimalen Zündzeitpunkts keine Rolle, da ausschließlich das Problem der Kraftstoffzufuhr behandelt wird.

Der Erfindung liegt die Aufgabe zugrunde, ein gattungsgemäßes Verfahren zu schaffen, daß mit geringem Aufwand die optimale Einstellung der Zündzeitpunkte, ggf. auch der Einspritzzeitpunkte sowie der Kraftstoffzumessung vorzunehmen gestattet.

Die Aufgabe wird bei einem gattungsgemäßen Verfahren durch die kennzeichnenden Merkmale des Patentanspruchs 1 gelöst, vorteilhafte Ausbildungen des Verfahrens beschreiben die Unteransprüche.

Ein wesentliches Merkmal der Erfindung ist also die Gewinnung von Triggersignalen für die Regelung der Energieumsetzung in einem Brennraum einer Brennkraftmaschine aus Signalen für die tatsächlichen Einspritzvorgänge. Zusätzlich wird als Parameter der Einspritzung die eingespritzte Kraftstoffmenge über die Zeit erfaßt. Dadurch ist es möglich, auftretende Fertigungstoleranzen und Einflüsse durch die Alterung der einzelnen Komponenten, insbesondere der Einspritzventile, bei der Abstimmung des Einspritzbeginns des Abstandes von Einspritzbeginn und einer Zündauslösung und der Abstimmung des zeitlichen Verlaufs der eingespritzten Kraftstoffmenge zu berücksichtigen. Dies gilt auch für den In Anspruch 8 behandelten Fall der Optimierung des jeweiligen Einspritzbeginns bzw. der Einspritzmenge über die Zeit im Hinblick auf die momentanen Betriebsparameter der Brennkraftmaschine, wobei die Parameter der Einspritzung als Istwerte zur Regelung des Einspritzbeginns auf zumindest einen Sollwert herangezogen werden. Dies schließt aber nicht aus, daß gemäß Anspruch 5 zur Gewinnung der Triggersignale die meßtechnisch erfaßten Parameter der Einspritzung ebenfalls in Abhängigkeit von Maschinen- und/oder Umgebungsparametem optimiert werden können, und zwar nach Zusammenhängen (gespeicherten Kennfeldern), die von den entsprechenden Funktionen für die Optimierung des Einspritzbeginns abweichen können.

Das erfindungsgemäße Verfahren arbeitet besonders genau, wenn brennraumindividuell die Parameter der Einspritzung des vorhergehenden Einspritzvorgangs mittels eines Sensors erfaßt werden, wobei die Bewegungsparameter von Stellelementen des Einspritzventils oder der Einspritzdruck bei der Zuführung des Kraftstoffes in den Brennraum als Maß für die Einspritzparameter erfaßt werden können. Bei den derzeit verwendeten Einspritzventilen werden nach einer Ausbildung der Erfindung Bewegungsfühler für Hubbewegungen von als Ventilnadeln gebildete Stellelemente der Einspritzventile verwendet. Für die Ermittlung des Einspritzdrucks können Druckfühler an den zu den Einspritzventilen führenden Kraftstoffleitungen vorteilhaft eingesetzt werden.

Grundsätzlich ist eine dahingehende Ausgestaltung des Verfahrens möglich, daß nur zu bestimmten Zeitpunkten eine meßtechnische Erfassung der Einspritzparameter erfolgt und der so ermittelte Wert gespeichert wird; dieser gespeicherte Wert ist dann bis zur nächsten Messung der Einspritzparameter der Ausgangswert für die Regelung der Energieumsetzung für die Gewinnung von Zündsignalen maßgebend. Es ist jedoch auch möglich, und zwar insbesondere bei einer vorgesehenen Regelung des Einspritzbeginns, auf eine brennraumindividuelle Gewinnung bzw. Regelung zu verzichten und in dieser Weise Triggersignale für alle Zündeinrichtungen der Maschine zu gewinnen, wobei die Parameter der Einspritzung des Zylinders als Grundlage dienen, bei dem die toleranzbedingte Verschiebung des Zündzeitpunktes zur Vermeidung eines Zündaussetzers am größten ist.

Ein weiterer Vorteil der Erfindung ist darin zu sehen, daß zu ihrer Realisierung an sich bekannte Meß- und Regeleinrichtungen Verwendung finden können, die lediglich in vom Stand der Technik abweichender Weise von Signalen für die Parameter der Einspritzung zur Gewinnung von Triggersignalen Gebrauch machen.

Nachfolgend wird die Erfindung anhand von Ausführungsbeispielen näher beschrieben. Die zugehörigen Zeichnungen zeigen:
- Figur 1a: einen idealisierten Verlauf der Einspritzmenge,
- Figur 1b: einen toleranzabhängigen Verlauf der Einspritzmenge,
- Figur 2: den Aufbau eines Einspritzventils,
- Figur 3a: einen idealisierten Verlauf des Einspritzdrucks,
- Figur 3b: einen toleranzabhängigen Verlauf des Einspritzdruckes,
- Figur 4: die Anordnung eines Druckfühlers in der Kraftstoffleitung und,
- Figur 5: einen Verlauf der Winkelgeschwindigkeit mit durch Bauteiltoleranzen auftretenden Schwankungen.

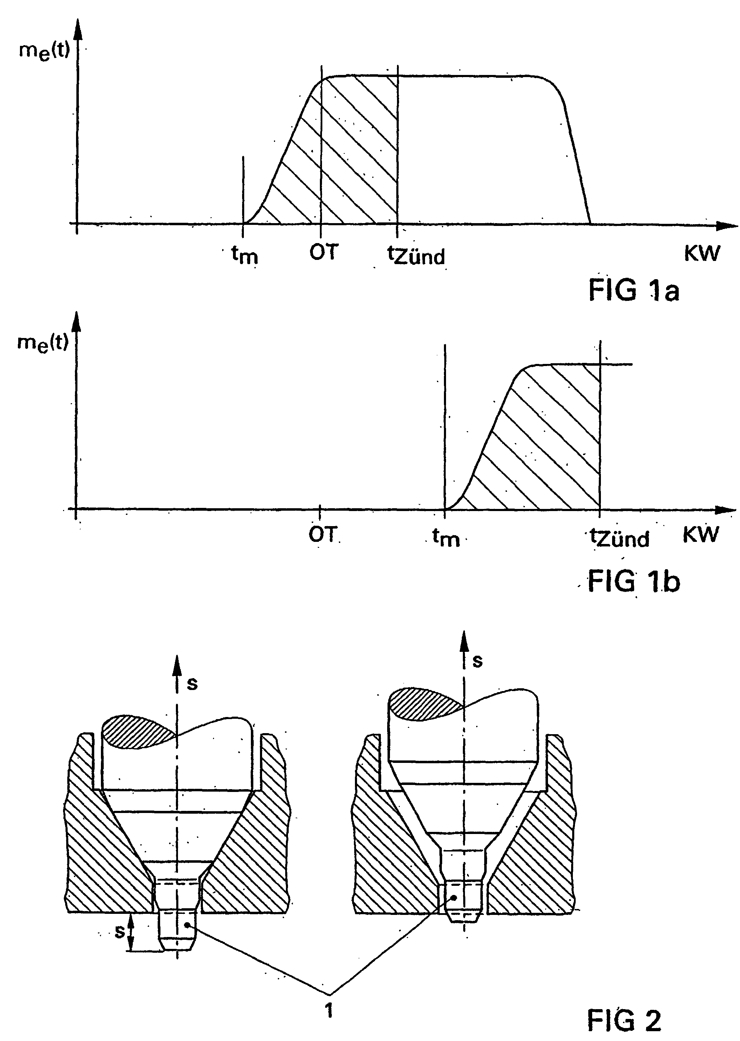

Bei direkt einspritzenden Brennkraftmaschinen, d. h. der Kraftstoff wird in den offenen Brennraum eingespritzt, wird der Einspritzbeginn jeweils einem bestimmten Kurbelwinkel KW zugeordnet. Bei fremdgezündeten Brennkraftmaschinen ist es aber Voraussetzung, daß der Einspritzbeginn tₘ vor der Zündauslösung t_{zünd} liegt, wobei nicht nur der Einspritzbeginn an sich, sondern auch die Bildung eines zündfähigen Gemisches um die Zündkerze in Abhängigkeit des Verlaufs der Einspritzmenge mₑ(t) eine Voraussetzung darstellt. Somit ist der Abstand zwischen dem Einspritzbeginn und dem Zeitpunkt der Zündauslösung t_{zünd} - tm eine wesentliche Abstimmgröße, wichtiger als die direkte Zuordnung zur OT-Lage der Kurbelwelle. Toleranzunterschiede an den Einspritzventilen, welche durch die Fertigung aber auch die Alterung der Ventilkomponenten auftreten können, und die daraus resultierenden Schwankungen im Verlauf der Einspritzmenge mₑ(t) und des Einspritzbeginns tₘ haben auf diesen Abstand einen wesentlichen Einfluß. In den Figuren 1a und 1b ist der jeweilige Verlauf des Einspritzbeginns tₘ und der Verlauf der Menge mₑ(t) über den Kurbelwinkel KW dargestellt, wobei Figur 1a einen idealisierten Verlauf der Einspritzmenge mₑ(t) des Kraftstoffes, bei der ein zündfähiges Gemisch im Bereich der Zündkerze für einen nach Maschinen- und/oder Umgebungsparametern abgestimmten Zündzeitpunkt t_{zünd} vorhanden ist, zeigt. In Figur 1b ist der Verlauf der Einspritzmenge mₑ(t) und des Einspritzzeitpunktes t_{zünd}, durch Toleranzen an den Komponenten des Einspritzventils beeinflußt, dargestellt. Entsprechend muß eine Verschiebung des Zündzeitpunktes t_{zünd} erfolgen.

Der zeitliche Verlauf der Einspritzmenge hängt einerseits vom Öffnungsquerschnitts des Einspritzventils und andererseits vom Einspritzdruck ab. Beide Größen werden für die Ermittlung der Einspritzmenge verwendet.

Die Erfassung des Verlaufs des Öffnungsquerschnittes des Einspritzventils kann vorteilhafterweise über die Bewegungsparameter von Stellelementen des Einspritzventils erfolgen. Eine mögliche Ausbildung des Einspritzventils mit einem als Ventilnadel ausgebildeten Stellelement 1 zeigt Figur 2, bei dem durch Erfassung der Hubbewegung S der Ventilnadel 1 ein Maß für den Öffnungsquerschnitt des Einspritzventils erhalten wird.

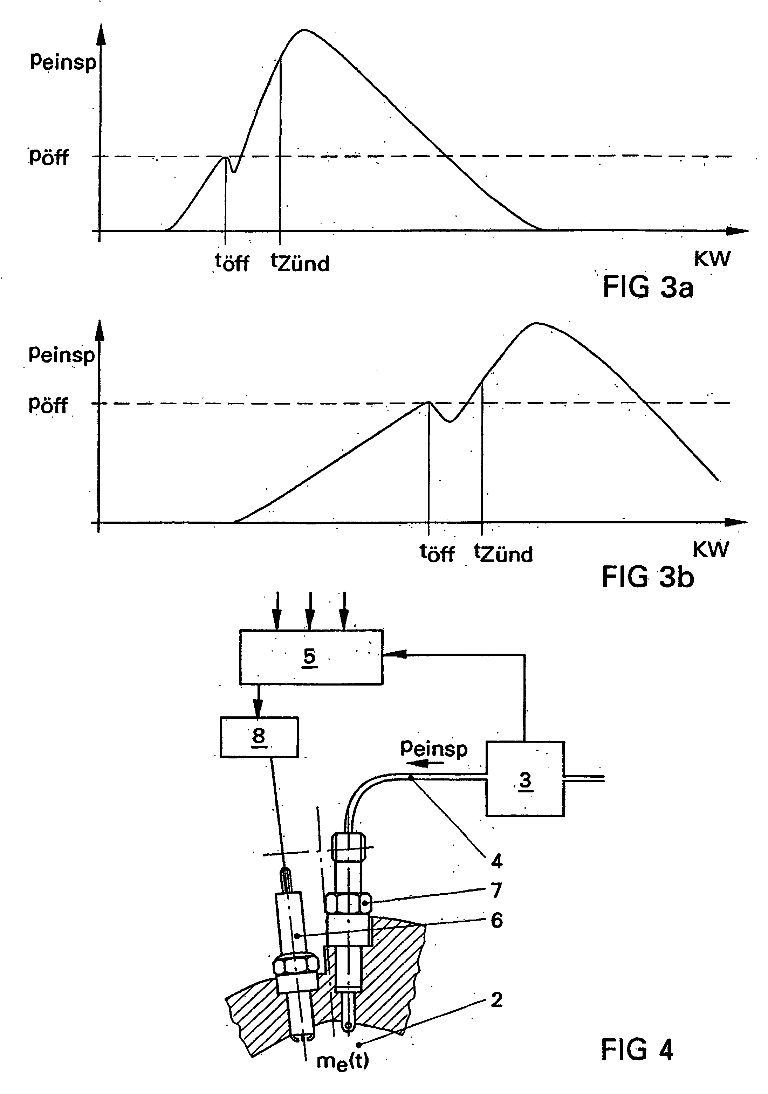

Wie schon ausgeführt wurde, hängt der Verlauf der Einspritzmenge mₑ₍ₜ₎ in den Brennraum 2 außerdem von dem Druck pₑᵢₙₛₚ ab, mit dem der Kraftstoff eingespritzt wird. Ein entsprechender Verlauf des Einspritzdruckes Pₑᵢₙₛₚ ohne die Einwirkung von fertigungs- oder alterungsbedingten Toleranzen ist in Figur 3a gezeigt, wobei das Erreichen des Öffnungsdruckes p_{öff} den Einspritzbeginn angibt. Weiterhin ist der in Abhängigkeit von Maschinen- und/oder Umgebungsparametem vorgegebene Zündzeitpunkt t_{zünd} angegeben. Durch auftretende Toleranzen am Einspritzventil verschiebt sich einmal der Zeitpunkt, bei dem der Einspritzdruck pₑᵢₙₛₚ zum Öffnen des Einspritzventils ausreicht und auch seine Höhe, da im Brennraum veränderte Druckverhältnisse vorherrschen. Entsprechend muß der Zündzeitpunkt t_{zünd} verschoben werden, wie in Figur 3b gezeigt ist. Die Größe des Einspritzdruckes kann vorteilhafterweise über einen Druckfühler 3 in der zu den Einspritzventilen führenden Kraftstoffleitung 4 erfaßt werden und einem Steuergerät 5, wie auch des Öffnungsquerschnitts des Einspritzventils 7, neben anderen Parametern wie Last, Drehzahl, Maschinen- und Umgebungstemperatur, Brennraum- und Umgebungsdruck zugeführt werden, das daraus den optimalen Zündzeitpunkt t_{zünd} der Zündeinrichtung 8 für die entsprechende Zündkerze 6 bestimmt (Figur 4).

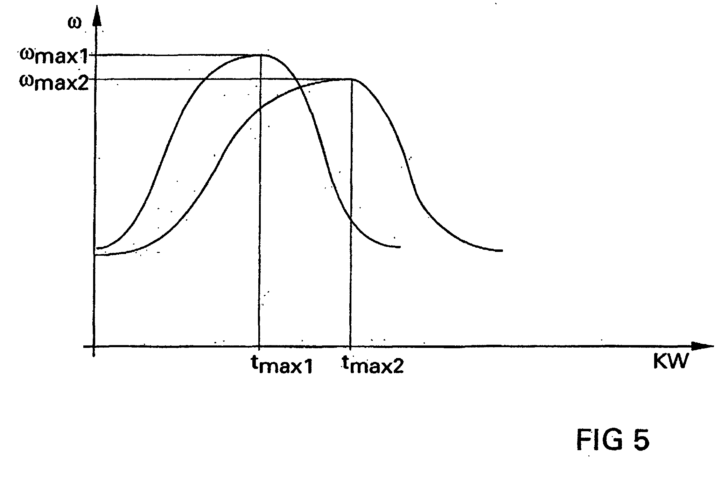

Die ermittelte Kraftstoffmenge eines Einspritzzyklusses kann weiterhin für eine Laufruhenregelung Verwendung finden. Jede Verbrennung führt zu einem Maximum in der Winkelgeschwindigkeit der Kurbelwelle. Durch Bauteiltoleranzen zwischen den Einspritzventilen der einzelnen Zylinder als auch durch alterungsbedingte Veränderungen an einem Einspritzventil treten Differenzen der Winkelgeschwindigkeitmaxima sowohl in ihrer Höhe ωₘₐₓ als auch ihres Zeitpunktes tₘₐₓ auf. In Figur 5 ist am Beispiel eines Zylinders sowohl eine zeitlicher Verschiebung (tₘₐₓ₂ - tₘₐₓ₁) zwischen dem Auftreten der Winkelgeschwindigkeitmaxima zweier Verbrennungszyklen zum Kurbelwellenwinkel KW als auch eine Differenz ihrer Amplituden ωₘₐₓ₁ - ωₘₐₓ₂ dargestellt. Durch die Erfassung der individuellen Einspritzparameter, Einspritzbeginn und Einspritzmenge über die Zeit, als Istwert und Einführung dieses Istwertes in einen Regelkreis können für den darauffolgenden Verbrennungszyklus die über ein drehzahl- und lastabhängiges Kennfeld für alle Zylinder abgestimmten Einspritzparameter individuell für jeden einzelnen Zylinder berechnet und die Winkelgeschwindigkeitsschwankungen durch Verschiebung des Einspritzzeitpunktes oder Veränderung der Einspritzmenge ausgeregelt werden.

### BEZUGSZEICHEN

- *t*_{*m*}: *Einspritzbeginn*
- *t*_{*zünd*}: *Zündauslösung*
- *m*_{*e*}*(t)*: *Einspritzmenge*
- *S*: *Hubbewegung*
- *p*_{*einsp*}: *Einspritzdruck*
- *p*_{*öff*}: *Öffnungsdruck*
- *1*: *Ventilnadel*
- *2*: *Brennraum*
- *3*: *Druckfühler*
- *4*: *Kraftstoffleitung*
- *5*: *Steuergerät*
- *6*: *Zündkerze*
- *7*: *Einspritzventil*
- *8*: *Zündeinrichtung*
- ω: *Winkelgeschwindigkeit*
- *ω*_{*max*}: *Winkelgeschwindigkeitmaxima*
- *KW*: *Kurbelwinkel*

## Patentansprüche

1. Verfahren zur Gewinnung von Triggersignalen für die Regelung der Energieumsetzung einer Brennkraftmaschine mit Kraftstoffeinspritzung in einem Brennraum (2) über brennraumindividuelle Einspritzventile (7), **dadurch gekennzeichnet, daß** mittels Sensoren (1, 3) die eingespritzte Kraftstoffmenge (mₑ(t)) über die Zeit und der Einspritzbeginn (tₘ) arfaßt werden, und daß abhängig von diesen Parametern ein Triggersignal für die Zündung in dem Brennraum (2) gewonnen wird.

2. Verfahren nach Anspruch 1, **dadurch gekennzeichnet, daß** die Sensoren Bewegungsparameter (s) von Stellelementen (1) der Einspritzventile (7) erfassen.

3. Verfahren nach Anspruch 2, **dadurch gekennzeichnet, daß** die Sensoren Bewegungsfühler für Hubbewegungen (s) von den als Ventilnadeln ausgebildeten Stellelementen (1) der Einspritzventile (7) sind.

4. Verfahren nach Anspruch 1, **dadurch gekennzeichnet, daß** die Sensoren den Einspritzdruck (pₑᵢₙₛₚ) bei der Zuführung des Kraftstoffes in den Brennraum (2) erfassen.

5. Verfahren nach einem der Ansprüche 1 bis 4, **dadurch gekennzeichnet, daß** die erfaßten Parameter der Einspritzung (mₑ(t), tₘ) zur Gewinnung des Triggersignals in Abhängigkeit von Maschinen- und/oder Umgebungsparametern, wie Last, Drehzahl, Maschinen- und Umgebungstemperatur, Brennraum- und Umgebungsdruck, verändert werden.

6. Verfahren nach einem der Ansprüche 1 bis 5, **dadurch gekennzeichnet, daß** die Gewinnung des Triggersignals aus den Parametern der Einspritzung (mₑ(t), tₘ) brennraumindividuell erfolgt.

7. Verfahren nach einem der Ansprüche 1 bis 6, **dadurch gekennzeichnet, daß** die Parameter der Einspritzung (mₑ(t); tₘ) gespeichert werden und daraus das Triggersignal gewonnen wird.

8. Verfahren nach einem der Ansprüche 1 bis 7, **dadurch gekennzeichnet, daß** die Parameter der Einspritzung als Istwerte zur Regelung des Einspritzbeginns auf zumindest einen Sollwert herangezogen werden.

## Claims

1. Method for obtaining trigger signals for regulating the conversion of energy of an internal combustion engine with fuel injection in a combustion space (2) via injection valves (7) individual to each combustion space, **characterized in that** the injected fuel quantity (mₑ(t)) over time and the start of injection (tₘ) are detected by means of sensors (1, 3), and **in that** a trigger signal for ignition in the combustion space (2) is obtained as a function of these parameters.

2. Method according to Claim 1, **characterized in that** the sensors detect movement parameters (s) of actuating elements (1) of the injection valve (7).

3. Method according to Claim 2, **characterized in that** the sensors are movement sensors for stroke movements (s) of the actuating elements (1) of the injection valves (7), said actuating elements being designed as valve needles.

4. Method according to Claim 1, **characterized in that** the sensors detect the injection pressure (pₑᵢₙₛₚ) during the supply of fuel into the combustion space (2).

5. Method according to one of Claims 1 to 4, **characterized in that**, to obtain the trigger signal, the detected injection parameters (mₑ(t), tₘ) are changed as a function of machine and/or ambient parameters, such as load, rotational speed, machine and ambient temperature, combustion-space and ambient pressure.

6. Method according to one of Claims 1 to 5, **characterized in that** the trigger signal is obtained from the injection parameters (mₑ(t), tₘ) individually for each combustion space.

7. Method according to one of Claims 1 to 6, **characterized in that** the injection parameters (mₑ(t); tₘ) are stored and the trigger signal is obtained from these.

8. Method according to one of Claims 1 to 7, **characterized in that** the injection parameters are used as actual values for regulating the start of injection to at least one desired value.

## Revendications

1. Procédé pour l'obtention de signaux de déclenchement pour la régulation de la conversion d'énergie d'un moteur à combustion interne à injection de carburant dans une chambre de combustion (2) via des soupapes d'injection (7) propres à chaque chambre de combustion, **caractérisé en ce que** la quantité de carburant injectée (mₑ(t)) au fil du temps et le début de l'injection (tₘ) sont saisis au moyen de capteurs (1, 3) et **en ce qu'**un signal de déclenchement pour l'allumage dans la chambre de combustion (2) est obtenu en fonction de ces paramètres.

2. Procédé selon la revendication 1, **caractérisé en ce que** les capteurs saisissent des paramètres de déplacement (s) d'éléments de réglage (1) des soupapes d'injection (7).

3. Procédé selon la revendication 2, **caractérisé en ce que** les capteurs sont des détecteurs de mouvement pour des déplacements de course (s) des éléments de réglage (1) des soupapes d'injection (7) conformés en pointeaux de soupapes.

4. Procédé selon la revendication 1, **caractérisé en ce que** les capteurs saisissent la pression d'injection (Pᵢₙⱼ) lors de l'introduction du carburant dans la chambre de combustion (2).

5. Procédé selon l'une quelconque des revendications 1 à 4, **caractérisé en ce que** les paramètres saisis de l'injection (mₑ(t), tₘ) pour l'obtention du signal de déclenchement sont modifiés en fonction des paramètres du moteur et/ou de l'environnement, tels que la charge, le régime, la température du moteur et la température ambiante, la pression de la chambre de combustion et la pression ambiante.

6. Procédé selon l'une quelconque des revendications 1 à 5, **caractérisé en ce que** l'obtention du signal de déclenchement à partir des paramètres de l'injection (mₑ(t), tₘ) se fait dans chaque chambre de combustion.

7. Procédé selon l'une quelconque des revendications 1 à 6, **caractérisé en ce que** les paramètres de l'injection (mₑ(t), tₘ) sont mémorisés et le signal de déclenchement en est tiré.

8. Procédé selon l'une quelconque des revendications 1 à 7, **caractérisé en ce qu'**on fait appel aux paramètres de l'injection en tant que valeurs réelles pour la régulation du début de l'injection à au moins une valeur théorique.
